# EUROPÄISCHE PATENTSCHRIFT

(11) **EP 3 962 781 B1**
(45) Veröffentlichungstag und Bekanntmachung des Hinweises auf die Patenterteilung: **29.11.2023**
(21) Anmeldenummer: 20725668.6
(22) Anmeldetag: 06.05.2020
(51) Int. Cl.: B60Q 3/78, F21V 11/14, F21V 5/00, F21V 8/00, B60Q 3/54, B60R 13/02, F21Y 109/00, F21Y 115/10, F21Y 113/10, F21Y 103/20

(54) **BELEUCHTBARES ZIERTEIL**
ILLUMINATABLE TRIM PART
ÉLÉMENT DÉCORATIF ÉCLAIRABLE

(30) Priorität: 06.06.2019 DE 102019115368
(43) Veröffentlichungstag der Anmeldung: 09.03.2022
(73) Patentinhaber: HIB Trim Part Solutions GmbH, 76646 Bruchsal (DE)
(72) Erfinder: SONNLEITNER, Tobias, 90461 Nürnberg (DE); SÜß, Thorsten, 76189 Karlsruhe (DE); JAHN, Thomas, 76694 Forst (DE)
(74) Vertreter: Staeger & Sperling Partnerschaftsgesellschaft mbB
(86) Internationale Anmeldenummer: PCT/EP2020/062532
(87) Internationale Veröffentlichungsnummer: WO 2020/244873

(56) Entgegenhaltungen:
- EP-A1- 2 415 639
- EP-A2- 2 060 443
- DE-B4-112013 007 216
- US-A1- 2019 031 095

## Beschreibung

Die Erfindung betrifft ein beleuchtbares Zierteil, insbesondere zur Anwendung im Automobilbereich, wobei das Zierteil im Wesentlichen ein Trägerelement und zumindest einen in das Trägerelement eingebetteten Leuchtmittelträger sowie eine das Trägerelement und von dem Leuchtmittelträger durchleuchtbare Dekorschicht umfasst und wobei durch den Leuchtmittelträger zeit- und intensitätsvariable Lichtmuster erzeugbar sind.

Im Stand der Technik ist bereits eine Vielzahl von beleuchtbaren Zierteilen bekannt. Diese Zierteile, wie sie beispielsweise aus der EP 2 060 443 A2 bekannt sind, beruhen meist auf dem Prinzip, dass Lichtleiter durch eine Trägerschicht hinter die Dekorschicht geführt sind und diese durchleuchten. Um eine gleichmäßige Beleuchtung herzustellen, ist meist vorgesehen, dass die Lichtleiter parallel zu der Dekorschicht verlaufen und entlang ihrer Längserstreckung Licht durch die Dekorschicht hindurch abstrahlen. Dadurch können keine zeit- und farbintensitätsvariablen Lichtmuster über die Erstreckung des Zierteils erzeugt werden, da das durch den jeweiligen Lichtleiter transportierte Licht entlang seiner gesamten Erstreckung im Wesentlichen gleichmäßig durch die Dekorschicht abgestrahlt wird, so dass an dem Zierteil durch den Lichtleiter jeweils nur eine Farbe und eine Intensität wiedergebbar ist. Farb- oder Intensitätsänderungen an dem Zierteil durch die Beleuchtung können daher nicht abschnittsweise eingestellt werden, sondern wirken sich auf gleichmäßig auf die Abstrahlung des Lichts durch die Dekorschicht hindurch aus. Wird Licht alternativ von einer Leuchtmittelmatrix oder dergleichen über einzelne Lichtleiter hinter die Dekorschicht gelenkt und mit einem Licht emittierenden Ende nebeneinander angeordnet, weist ein solches Zierteil einen sehr hohen Bauraumbedarf auf, da die Lichtquellen bzw. Leuchtmittel getrennt von dem Zierteil ausgebildet und angeordnet sind. Entsprechend wird Platz für die Lichtquellen und die das Licht von den Lichtquellen zu dem Zierteil leitenden Lichtleiter benötigt.

Weitere beleuchtbare Zierteile sind beispielsweise aus der US 2019/0031095 A1, der DE 11 2013 007 216 B4 und der EP 2 415 639 A1 bekannt.

Generell gilt für die im Stand der Technik bekannten Lösungen zudem, dass die Leuchtmittel zur Beleuchtung der Zierteile meist nicht einzeln ansteuerbar sind, so dass keine Lichtmuster oder Lichtverläufe erzeugt werden können, welche sich über die Zeit in ihrer Farbgebung oder ihrer Intensität ändern. Dadurch sind nur eingeschränkt Beleuchtungs- bzw. Lichteffekte an dem Zierteil erzielbar.

Der Erfindung liegt deshalb die Aufgabe zugrunde, die vorgenannten Nachteile zu überwinden und ein beleuchtbares Zierteil bereitzustellen, das kostengünstig herzustellen ist, in welchem die Leuchtmittel platzsparend integriert sind und mit bzw. an welchem zeit- und intensitätsvariable Lichtmuster erzeugbar sind.

Diese Aufgabe wird durch die Merkmalskombination gemäß Patentanspruch 1 gelöst.

Erfindungsgemäß wird ein beleuchtbares Zierteil vorgeschlagen, welches insbesondere für ein Fahrzeuginterieur oder -exterieur geeignet ist. Das erfindungsgemäße Zierteil weist eine Sichtseite und einer der Sichtseite gegenüberliegenden Rückseite auf. In einem eingebauten Zustand ist die Sichtseite des Zierteils vorzugsweise einem Betrachter zugewandt und die Rückseite vom Betrachter abgewandt, wobei an der Rückseite des Zierteils Befestigungselemente, wie beispielsweise Rasthaken oder Laschen, zur Befestigung des Zierteils am Fahrzeug ausgebildet sein können. Das Zierteil weist ein Trägerelement, zumindest einen Leuchtmittelträger und eine Dekorschicht auf. Die Dekorschicht ist an einer zu der Sichtseite weisenden Fläche des Trägerelements angeordnet und zumindest abschnittsweise durchleuchtbar ausgebildet, so dass die Dekorschicht zumindest einen durchleuchtbaren Abschnitt aufweist. Der zumindest eine Leuchtmittelträger ist in das Trägerelement eingebettet und ausgebildet, Licht durch zumindest einen Teil der durchleuchtbaren Abschnitte der Dekorschicht zu der Sichtseite des Zierteils zu emittieren. Hierbei wird als in das Trägerelement eingebettet definiert, dass der Leuchtmittelträger zu mehreren Seiten hin zumindest teilweise von dem Trägerelement umgeben bzw. in dem Trägerelement versenkt ist. Der Leuchtmittelträger umfasst eine Vielzahl von Gruppen von Leuchtmitteln, wobei die Leuchtmittel jeweils ausgebildet sind, Licht zu erzeugen und zu emittieren. Darüber hinaus sind die Gruppen von Leuchtmitteln unabhängig voneinander ansteuerbar, so dass durch eine entsprechende Ansteuerung der Gruppen von Leuchtmitteln zeit- und intensitätsvariable Lichtmuster erzeugbar sind.

Eine vorteilhafte Weiterbildungsvariante sieht zudem vor, dass die Dekorschicht zumindest abschnittsweise perforiert ausgebildet ist und der zumindest eine durchleuchtbare Abschnitt der Dekorschicht durch die perforierten Abschnitte der Dekorschicht gebildet werden, so dass die Dekorschicht durch die perforierten Abschnitte hindurch durchleuchtbar ist. Ist eine Vielzahl von durchleuchtbaren Abschnitten vorgesehen, kann jeweils ein durchleuchtbarer Abschnitt der Dekorschicht durch einen perforierten Abschnitt gebildet werden. Alternativ können auch mehrere durchleuchtbare Abschnitte der Dekorschicht durch einen gemeinsamen perforierten Abschnitt realisiert werden.

Alternativ oder zusätzlich zu einer Perforation sieht eine alternative und ebenfalls vorteilhafte Variante vor, dass die Dekorschicht aus zumindest einem ersten intransparenten Abschnitt und zumindest einem zweiten transparenten Abschnitt gebildet ist. Vereinfacht können die Abschnitte auch als intransparente Abschnitte und transparente Abschnitte bezeichnet werden. Dabei wird der zumindest eine durchleuchtbare Abschnitt der Dekorschicht durch die transparenten Abschnitte realisiert, so dass die Dekorschicht durch die transparenten Abschnitte hindurch durchleuchtbar ist. Vorzugsweise ist hierbei vorgesehen, dass jeweils ein transparenter Abschnitt einen durchleuchtbaren Abschnitt bestimmt. Die transparenten Abschnitte sind vorzugsweise linienförmig in die intransparenten Abschnitte eingebettet, wobei die transparenten Abschnitte geradlinig oder wellenförmig bzw. einem Muster folgend oder ein Muster abbildend verlaufen können. Darüber hinaus können die transparenten Abschnitte, bzw. ein Material aus dem diese Abschnitte hergestellt werden, eingefärbt sein, so dass die transparenten Abschnitte farbige Linien bilden, welche durch die Leuchtmittel bzw. durch den Leuchtmittelträger beleuchtbar sind. Abhängig von einem Transmissionsgrad des transparenten Abschnitts und ob der Abschnitt durch seinen Transmissiongrad milchig wirkt, kann der transparente Abschnitt auch als transluzenter Abschnitt bezeichnet werden.

Dabei wird die Transparenz der transparenten Abschnitte bzw. die Intransparenz der intransparenten Abschnitte durch die optischen Eigenschaften des Materials bestimmt, durch welches die jeweiligen Abschnitte gebildet sind. Der Grad der Transparenz kann hierbei auch als Transmissionsgrad angegeben werden. Dabei beschreibt der Transmissionsgrad in Prozent den Anteil des einfallenden Lichts, der ein Bauteil komplett durchdringt. Von intransparenten Abschnitten kann bereits bei einem Transmissionsgrad von weniger als 10% gesprochen werden. Transparente Abschnitte besitzen vorzugsweise einen Transmissionsgrad von mehr als 50%. Im Unterschied zu klaren bzw. transparenten Materialien mit hohem Transmissionsgrad werden Materialien, die zwar Licht hindurch lassen, aber wie beim Milchglas keine Gegenstände dahinter erkennen lassen, als transluzent oder durchscheinend bezeichnet und haben gegenüber klaren Materialien einen geringeren Transmissionsgrad.

Die Dekorschicht kann beispielsweise zumindest zum Teil aus einem Furnier, einem Metall oder einem Textil bestehen. Ein Textil kann durch seine Struktur bereits eine vollflächige Perforation aufweisen. Wird die Dekorschicht aus einem Furnier oder Metall gebildet, kann die Dekorschicht durch ein geeignetes Verfahren perforiert werden. Insbesondere bei einem Furnier oder einem Metall können die durchleuchtbaren Abschnitte der Dekorschicht zudem auch durch eine Dicke der Dekorschicht bestimmt werden. Diese kann vollflächig, also über ihre gesamte Flächenerstreckung, oder abschnittsweise so dünn ausgebildet werden, dass die Dekorschicht durch die Leuchtmittel bzw. durch den Leuchtmittelträger durchleuchtbar ist.

Sowohl für eine Perforation der Dekorschicht als auch für Abschnitte der Dekorschicht mit geringer Dicke gilt insbesondere, dass diese in Bereichen, mit welchem sie unmittelbar an ein intransparent ausgebildetes Trägerelement angrenzen, selbst intransparent erscheinen und nicht durchleuchtbar sind.

Eine vorteilhafte Weiterbildung der Erfindung sieht zudem vor, dass an einer zu der Sichtseite hin weisenden Fläche der Dekorschicht eine die Dekorschicht zu der Sichtseite hin vollflächig bedeckende transparente Schutzschicht angeordnet oder ausgebildet ist. Vorzugsweise ist die Schutzschicht ein transparent aushärtender Lack, der auf die Dekorschicht aufgetragen wird und an der Dekorschicht aushärtet. Durch die Schutzschicht kann die Dekorschicht sowohl vor mechanischer Beschädigung bzw. vor mechanischem Verschleiß als auch vor Alterungsprozessen, wie sie beispielsweise durch Sonneneinstrahlung verursacht werden, geschützt werden.

Insbesondere, wenn in der Dekorschicht transparente Abschnitte vorgesehen sind, aber auch zur Homogenisierung der Beleuchtung hinter einem Perforierten Abschnitt der Dekorschicht, sieht eine vorteilhafte Variante ferner vor, dass zwischen dem Trägerelement und der Dekorschicht zumindest ein Diffusor zur Lichtstreuung angeordnet ist, wobei der Diffusor zumindest den durchleuchtbaren Abschnitt der Dekorschicht zu dem Trägerelement hin abdeckt. Der Diffusor kann vollflächig zwischen der Dekorschicht und dem Trägerelement angeordnet sein. Alternativ ist es zudem möglich, dass der Diffusor bzw. mehrere Diffusoren jeweils angrenzend an einen durchleuchtbaren Abschnitt der Dekorschicht angeordnet sind. Der zumindest eine Diffusor kann auch in das Trägerelement eingebettet bzw. versenkt angeordnet sein. Ist die Dekorschicht mit transparenten Abschnitten ausgebildet, kann der Diffusor auch integral mit dem transparenten Abschnitt ausgebildet sein oder einen Teil des transparenten Abschnitts bestimmen. Der Diffusor kann auch als Streuscheibe bezeichnet werden, da das einfallende Licht gestreut wird. Charakteristisch für jeden Diffusor ist, dass er eine große Anzahl kleiner Streuzentren besitzt. Treffen im Wesentlichen parallel laufende Lichtstrahlen aus den Leuchtmitteln an verschiedenen Stellen eines Diffusors auf, werden sie in unterschiedliche Richtung verteilt und erzeugen so diffuses Licht. Vorteilhaft an einem Diffusor ist, dass die einzelnen Leuchtmittel, welche von dem Diffusor verdeckt werden, und die hinter dem Diffusor in dem Trägerelement vorhandenen Bauteile und Strukturen von der Sichtseite des Zierteils aus nicht mehr erkannt werden können, und das von den Leuchtmitteln emittierte Licht von der Sichtseite aus nicht mehr bestimmten Leuchtmitteln zugeordnet werden kann.

Erfindungsgemäß ist vorgesehen, dass das Trägerelement zumindest abschnittsweise transparent oder transluzent ausgebildet ist und dass der zumindest eine Leuchtmittelträger den transparenten oder transluzenten Abschnitt des Trägerelements rahmenförmig umläuft. Der zumindest eine Leuchtmittelträger ist bei dieser Variante ausgebildet, Licht in den transparenten oder transluzenten Abschnitt des Trägerelements und im Wesentlichen parallel zu einer durch die Dekorschicht zu der Sichtseite hin bestimmten Sichtfläche zu emittieren, so dass das von den Leuchtmitteln erzeugte Licht seitlich in den transparenten oder transluzenten Abschnitt eingekoppelt wird und der transparente oder transluzente Abschnitt flächig durchleuchtet wird. Das Licht kann durch den transparenten Abschnitt des Trägerelements geleitet werden und durch die durchleuchtbaren Abschnitte der Dekorschicht abstrahlen. Das Trägerelement kann ferner aus mehreren Materialen gebildet werden, wobei beispielsweise ein aus einem ersten Material gebildeter transparenter Abschnitt des Trägerelements mit einem aus einem zweiten Material gebildeten intransparenten Abschnitt des Trägerelements einteilig oder einstückig verbunden sein können. Der Leuchtmittelträger, welcher den transparenten Abschnitt des Trägerelements rahmenförmig umläuft, kann flexibel und einstückig ausgebildet sein. Als flexibel wird hierbei verstanden, dass der Leuchtmittelträger zumindest um eine in seine Breitenrichtung verlaufende Biegeachse in einem vorbestimmten Bereich biegbar ist ohne zu brechen und ohne die Beleuchtungsfunktion zu verlieren. Alternativ kann der Leuchtmittelträger aus mehreren Abschnitten gebildet werden, welche jeweils einer Seite des transparenten Abschnitts des Trägerelements zugeordnet sind, wobei die Abschnitte des Leuchtmittelträgers mit flexiblen oder starren Verbindungselementen elektrisch miteinander verbunden sein können. In den transparenten Abschnitt des Trägerelements können zudem Funktionselemente eingebracht sein. Beispielsweise können Reflektoren oder Diffusoren unmittelbar in dem transparenten Abschnitt angeordnet sein, so dass das Licht in dem transparenten Abschnitt geleitet und durch die Funktionselemente zu den durchleuchtbaren Abschnitten der Dekorschicht umgelenkt und gestreut wird. Ferner können als Funktionselemente auch Trennwände in dem transparenten Abschnitt des Trägerelements ausgebildet sein, durch welche verschiedene beleuchtbare Zonen bestimmt sind, so dass kein Streulicht aus einer ersten Zone, welche einem ersten durchleuchtbaren Abschnitt der Dekorschicht zugeordnet ist, in eine zweite Zone, welche einem zweiten durchleuchtbaren Abschnitt der Dekorschicht zugeordnet ist, gelangen kann.

Vorzugsweise gilt für die Transparenz bzw. die Transluzenz des transparenten oder transluzenten Abschnitts des Trägerelements, wie für die transparenten oder transluzenten Abschnitte der Dekorschicht, dass diese durch die optischen Eigenschaften des Materials bestimmt wird, durch welches der Abschnitt gebildet ist.

Alternativ ist bei einer nicht erfindungsgemäßen Variante vorgesehen, dass der zumindest eine Leuchtmittelträger in dem Trägerelement den zumindest einen durchleuchtbaren Abschnitt der Dekorschicht überdeckend eingebettet ist. Sind mehrere durchleuchtbare Abschnitte vorgesehen, ist vorzugsweise jeweils ein Leuchtmittelträger oder zumindest ein Abschnitt eines Leuchtmittelträgers einem durchleuchtbaren Abschnitt zugeordnet. Der zumindest eine Leuchtmittelträger ist ausgebildet, Licht durch den zumindest einen durchleuchtbaren Abschnitt der Dekorschicht im Wesentlichen orthogonal zu einer durch die Dekorschicht zu der Sichtseite hin bestimmten Sichtfläche zu emittieren. Der Leuchtmittelträger kann hierbei vollständig versenkt in dem Trägerelement eingebettet sein, so dass die zu der Sichtseite gewandte Oberfläche des Leuchtmittelträgers vorzugsweise bündig, d.h. in einer Ebene, mit der zu der Sichtseite gewandten Fläche des Trägerelements abschließt. Ist alternativ ein Diffusor an dem Leuchtmittelträger vorgesehen, kann die zu der Sichtseite gewandte Fläche des Diffusors bündig mit der zu der Sichtseite gewandten Fläche des Trägerelements abschließen und der Leuchtmittelträger zumindest in einem Querschnitt durch das Zierteil gesehen vollständig von dem Trägerelement und dem Diffusor umgeben sein.

Eine weitere nicht zu der Erfindung gehörende Variante sieht vor, dass ein Lichtumlenkelement angrenzend an einen jeweiligen Leuchtmittelträger in das Trägerelement eingebettet ist, welches den zumindest einen durchleuchtbaren Abschnitt der Dekorschicht überdeckt. Sind mehrere durchleuchtbare Abschnitte der Dekorschicht vorgesehen, ist vorzugsweise jedem durchleuchtbaren Abschnitt jeweils ein Lichtumlenkelement mit jeweils einem Leuchtmittelträger zugeordnet. Der jeweilige Leuchtmittelträger ist ausgebildet, Licht zu dem jeweiligen Lichtumlenkelement und durch das Lichtumlenkelement zu einer durch die Dekorschicht zu der Sichtseite hin bestimmten Sichtfläche zu emittieren. Ferner ist das Lichtumlenkelement ausgebildet, das Licht von dem jeweiligen Leuchtmittelträger zu dem zumindest einem transparenten Abschnitt der Dekorschicht umzulenken oder in dem Lichtumlenkelement zu streuen. Das Lichtumlenkelement kann mehrteilig ausgebildet sein und beispielsweise integral einen Diffusor und/oder einen Reflektor, wie beispielsweise einen Spiegel bzw. eine reflektierende Fläche, umfassen. Alternativ kann die Umlenkung auch allein durch einen Diffusor realisiert werden, durch welchen das Licht gleichmäßig in dem Lichtumlenkelement verteilt wird und entsprechend auch durch den durchleuchtbaren Abschnitt der Dekorschicht abstrahlt. Der Diffusor kann zudem auch zu den Seiten hin, an welchen er unmittelbar an dem Trägerelement angrenzt, mit einer Funktionsschicht beschichtet sein, durch welche das Licht an der Grenzfläche zwischen Diffusor und Trägerelement zusätzlich gestreut, absorbiert oder reflektiert wird.

Eine vorteilhafte Weiterbildung sieht ferner vor, dass jede Gruppe von Leuchtmitteln jeweils zumindest ein Leuchtmittel umfasst. Das zumindest eine Leuchtmittel ist jeweils ausgebildet, Licht in verschiedenen Farben zu erzeugen bzw. zu emittieren, so dass farbvariable Lichtmuster erzeugbar sind. Die Leuchtmittel sind vorzugsweise als LED und insbesondere als sogenannte µLED ausgebildet. Ein Leuchtmittel kann ferner eine RGB-LED oder eine RGBW-LED sein. Alternativ kann ein einzelnes Leuchtmittel auch durch mehrere verschiedenfarbige LEDs gebildet werden, so dass durch ein einzelnes Leuchtmittel verschiedene Farben erzeugbar sind.

Die Leuchtmittel oder die Gruppen von Leuchtmitteln sind bei einer ebenfalls vorteilhaften Weiterbildung auf dem Leuchtmittelträger einreihig oder mehrreihig angeordnet.

Sind die Leuchtmittel oder die Gruppen von Leuchtmitteln auf dem Leuchtmittelträger mehrreihig angeordnet, sieht eine weitere vorteilhafte Variante der Erfindung zudem vor, dass zwischen den Reihen von Leuchtmitteln oder den Reihen von Gruppen von Leuchtmitteln ein Abstand vorgesehen ist, so dass jeweils eine Reihe einem durchleuchtbaren Abschnitt der Dekorschicht zugeordnet ist. Alternativ sind die Reihen von Leuchtmitteln oder die Reihen von Gruppen von Leuchtmitteln in einer ebenfalls vorteilhaften Variante im Wesentlichen unmittelbar aneinander angrenzend angeordnet und die Leuchtmittel oder die Gruppen von Leuchtmitteln bilden ein Raster bzw. eine Matrix aus Leuchtmitteln, wobei das Raster einem durchleuchtbaren Abschnitt der Dekorschicht zugeordnet ist.

Der zumindest eine Leuchtmittelträger ist bei einer ebenfalls vorteilhaften Weiterbildung mit dem Trägerelement stoffschlüssig verbunden.

Vorzugsweise ist das Trägerelement aus einem spritzgussfähigen Material gebildet, wobei das Trägerelement in einem Spritzgussverfahren hergestellt ist, bei welchem der zumindest eine Leuchtmittelträger mit dem Trägerelement umspritzt wird. Bei dem Umspritzen des Leuchtmittelträgers mit dem Trägerelement ist ferner vorzugsweise vorgesehen, dass sich ein Grundmaterial, aus welchem der Leuchtmittelträger gebildet ist, mit dem Material, aus welchem das Trägerelement gebildet ist, stoffschlüssig verbindet und der Leuchtmittelträger zumindest abschnittweise mit dem Trägerelemente verschmilzt, so dass diese einstückig miteinander verbunden sind.

Weiter ist der zumindest eine Leuchtmittelträger erfindungsgemäß bandförmig als eine Leiterplatte ausgebildet. Auf der Leiterplatte, welche in Fachkreisen basierend auf dem Englischen als "printed circuit board" (PCB) bezeichnet wird, sind elektrische Leitungen bzw. Leiterbahnen zur Stromversorgung und Steuerung der Leuchtmittel aufgedruckt. Vorzugsweise ist die Leiterplatte einschichtig oder mehrschichtig aus einem Grundmaterial gebildet, auf welchem die Leiterbahnen aus einem elektrisch leitfähigen Material aufgedruckt sind. Neben Leiterbahnen können auch weitere elektrische Komponenten, wie beispielsweise Widerstände, aufgedruckt oder beispielsweise integrierte Schaltkreise (ICs) angeordnet und mit den Leiterbahnen kontaktiert sein. Darüber hinaus sind die einzelnen Leuchtmittel oder Gruppen von Leuchtmitteln ebenfalls auf dem Grundmaterial bzw. der Leiterplatte angeordnet, mit diesem verbunden und mit den Leiterbahnen kontaktiert. Die Leiterplatte kann starr aber auch flexibel ausgebildet sein.

Die Leuchtmittelträger können Anschlussleitungen vorsehen, welche sich zu der Rückseite des Zierteils hin durch das Trägerelement erstrecken. Alternativ können sich die Anschlussleitungen auch seitlich, also orthogonal zu einer die Sichtseite mit der Rückseite verbindenden Achse aus dem Zierteil heraus erstrecken. Die Anschlussleitungen dienen der Stromversorgung des zumindest einen Leuchtmittelträgers bzw. der darauf angeordneten Leuchtmittel und können auch zur Ansteuerung der Leuchtm ittel genutzt werden.

Um die Leuchtmittel bei geringem verdrahtungsaufwand einzeln ansteuern zu können, kann die Steuerung als Bussystem ausgebildet sein, bei welchem die einzelnen Leuchtmittel oder die Gruppen von Leuchtmittel jeweils als Slave dienen, welche der Ansteuerung einer als Master dienenden Steuereinheit folgen.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1a: eine erste Variante des Zierteils aus der Draufsicht;
- Fig. 1b: eine Querschnitt durch die erste Variante des Zierteils;
- Fig. 2a: eine nicht erfindungsgemäße zweite Variante des Zierteils aus der Draufsicht;
- Fig. 2b: eine Querschnitt durch die zweite Variante des Zierteils;
- Fig. 3a: eine nicht erfindungsgemäße dritte Variante des Zierteils aus der Draufsicht;
- Fig. 3b: eine Querschnitt durch die dritte Variante des Zierteils;
- Fig. 4a: eine nicht erfindungsgemäße vierte Variante des Zierteils aus der Draufsicht;
- Fig. 4b: eine Querschnitt durch die vierte Variante des Zierteils;

Die Figuren sind beispielhaft schematisch. Gleiche Bezugszeichen in den Figuren weisen auf gleiche funktionale und/oder strukturelle Merkmale hin.

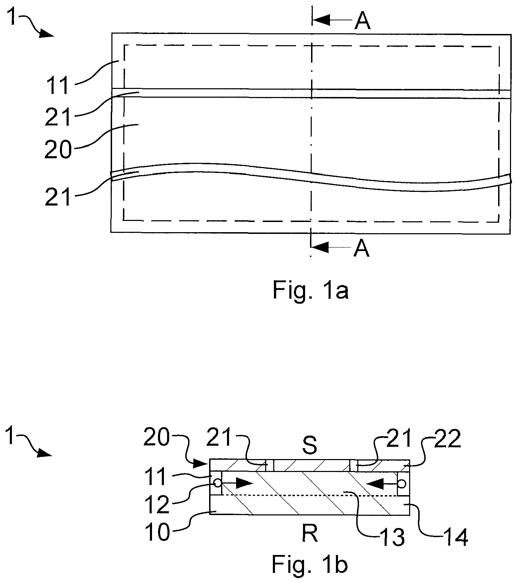

Die Figuren 1a, 2a, 3a und 4a zeigen jeweils eine Variante eines Zierteils 1 in einer Drauf- oder Aufsicht, also einer Sicht eines Betrachters von der Sichtseite aus auf die der Sichtseite zugewandte Sichtfläche des Zierteils 1, welche durch die Dekorschicht 20 bestimmt wird. Die unterhalb der Dekorschicht 20 liegenden und von der Sichtseite S aus nicht sichtbaren Elemente sind jeweils gestrichelt angedeutet. In den Figuren 1b, 2b, 3b und 4b ist jeweils ein Querschnitt durch das Zierteil 1 entlang der Schnittlinie A-A der zu der jeweiligen Variante gehörenden Draufsicht dargestellt.

Das Zierteil 1 wird in jeder der in den Figuren 1a bis 4b illustrierten Varianten jeweils im Wesentlichen aus einem Träger 10, in welchen zumindest ein Leuchtmittelträger 11 eingebettet ist, und eine den Träger 10 zu der Sichtseite S des Zierteils 1 bedeckende Dekorschicht 20 gebildet. Der jeweils zumindest eine Leuchtmittelträger 11 weist eine Vielzahl von Leuchtmitteln 12 auf, welche in einer Reihe entlang der Längserstreckung des jeweiligen Leuchtmittelträgers 11 angeordnet und ausgebildet sind, Licht zu erzeugen und durch durchleuchtbare Abschnitte 21 der Dekorschicht 20 zu der Sichtseite S des Zierteils 1 abzugeben.

Der durchleuchtbare Abschnitt 21 der Dekorschicht ist in jeder der Varianten der Figuren 1a bis 4b durch eine Perforation oder durch ein transparentes Material gebildet, wobei durch ein transparentes Material transparente Abschnitte in der Dekorschicht bestimmt werden. Die durchleuchtbaren Abschnitte 21 können sich sowohl geradlinig als auch geschwungen an der zu der Sichtseite S gewandten Sichtfläche der Dekorschicht erstrecken, wie es in den Figuren 1a, 2a, 3a und 4a dargestellt ist. Es sind auch einander überkreuzende Verläufe der linienförmig ausgebildeten durchleuchtbaren Abschnitte möglich. Eine Perforation kann auch vollflächig über die gesamte Flächenerstreckung der Dekorschicht 20 ausgebildet sein. Werden die durchleuchtbaren Abschnitte 21 durch ein transparentes Material bzw. durch transparente Abschnitte bestimmt, sind diese in intransparente Abschnitte 22 eingebettet, so dass die Dekorschicht 20 integral als Maskierungsschicht dient, da das von den Leuchtmitteln 12 emittierte Licht die intransparenten Abschnitte 22 nicht durchdringen kann.

In den Figuren 1a und 1b ist eine erste Ausführungsvariante eines erfindungsgemäßen Zierteils 1 dargestellt, bei welcher der Leuchtmittelträger 11 einen transparenten Abschnitt 13 des Trägerelements 10 rahmenförmig umläuft. Der Leuchtmittelträger 11 weist eine Vielzahl von Leuchtmitteln 12 auf, welche, wie durch die Pfeile in Figur 1b angedeutet, Licht in den transparenten Abschnitt 13 emittieren. Der transparente Abschnitt 13 ist integral als Diffusor ausgebildet. Alternativ können angrenzend an die durchleuchtbaren Abschnitte 21 der Dekorschicht 20 nicht dargestellte Diffusoren angeordnet sein, so dass das emittierte Licht an den Diffusoren gestreut wird und von der Sichtseite S des Zierteils 1 aus sichtbar ist. Zudem können zusätzlich oder alternativ zu den Diffusoren in dem transparenten Abschnitt in den Figuren nicht dargestellte Reflektoren vorgesehen sein, welche das Licht von den Leuchtmitteln 12 durch die durchleuchtbaren Abschnitte 21 hindurch umlenken. Das Trägerelement 10 kann vollständig aus einem transparenten Material gebildet sein, so dass das Trägerelement 10 vollständig transparent ist. Alternativ kann das Trägerelement 10, wie in Figuren 1b dargestellt, auch aus dem transparenten Abschnitt 13 und einem intransparenten Abschnitt 14 gebildet sein, welche stoffschlüssig miteinander verbunden sind. Zwischen dem transparenten Abschnitt 13 und dem intransparenten Abschnitt 14 kann auch eine reflektierende, absorbierende oder Licht streuende Schicht vorgesehen sein.

Bei der in Figur 1a und 1b dargestellten Ausführungsform bildet der Leuchtmittelträger 11 einen äußeren bzw. außenliegenden Randabschnitt des Trägerelements. Alternativ kann der Leuchtmittelträger 11 jedoch auch zu seinem außenliegenden Randabschnitt hin von dem Trägerelement 10 umgeben sein, wobei zumindest ein Bereich, in dem aus der Draufsicht gesehen, die durchleuchtbaren Abschnitte angeordnet sind, von dem Leuchtmittelträger 11 rahmenförmig umschlossen ist.

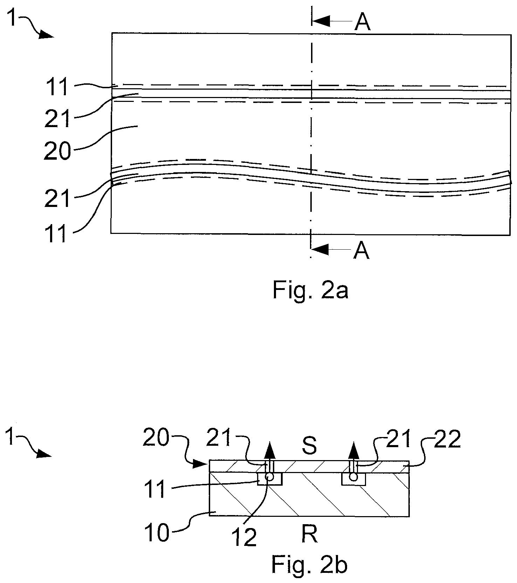

Bei der in den Figuren 2a und 2b schematisch dargestellten Ausführungsform des Zierteils 1 verläuft ein Leuchtmittelträger 11 jeweils in dem Trägerelement 11 angrenzend an einen durchleuchtbaren Abschnitt 21 der Dekorschicht 20. Die Leuchtmittelträger 11 sind jeweils so ausgerichtet, dass das durch die Leuchtmittel 12 emittierte Licht durch die durchleuchtbaren Abschnitte 21 zu der Sichtseite S hin abgestrahlt wird. Der in der Bildebene der Figur 2a unten angeordneten Leuchtmittelträger 11, welcher dem wellenförmig ausgebildeten durchleuchtbaren Abschnitt 21 zugeordnet ist, weist selbst einen aus der Draufsicht wellenförmigen Verlauf auf, wobei der Leuchtmittelträger 11 eine starre Leiterplatte umfasst, welche ebenfalls korrespondierend zu dem wellenförmigen Verlauf ausgebildet ist.

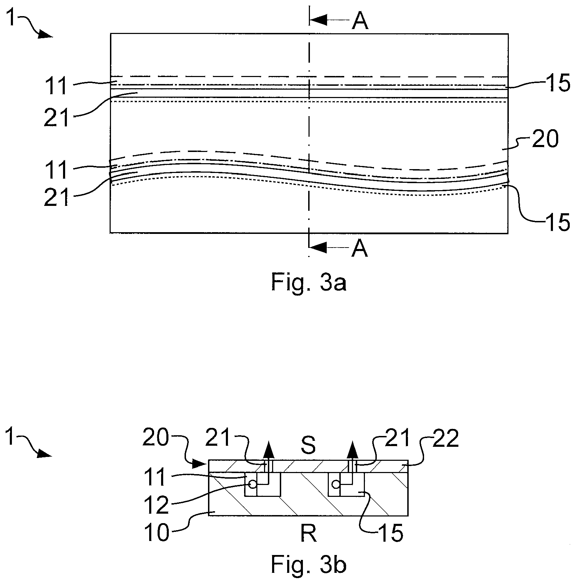

Bei einer weiteren alternativen Ausführungsvariante des Zierteils 1, wie sie in den Figuren 3a und 3b dargestellt ist, weist das Zierteil 1 zusätzlich ein Lichtumlenkelement 15 auf, welches in dem Trägerelement 10 benachbart zu den durchleuchtbaren Abschnitten 21 der Dekorschicht und diese überdeckend angeordnet ist. Die Leuchtmittelträger 11 sind unmittelbar angrenzend an ein jeweils zugeordnetes Lichtumlenkelement 15 angeordnet und mit den Leuchtmitteln 12 zu dem Lichtumlenkelement 15 ausgerichtet. Das Lichtumlenkelement 15 kann integral als Diffusor und/oder mit Reflektoren bzw. reflektierenden Elementen, wie beispielsweise einer spiegelnden oder hellen Fläche ausgebildet sein. Durch das jeweilige Lichtumlenkelement 15 wird das von den Leuchtmitteln 12 eingestrahlte Licht gestreut und/oder zu der Sichtseite S hin umgelenkt, so dass das Licht der Leuchtmittel durch die durchleuchtbaren Abschnitte 21 zu der Sichtseite S hin abstrahlt.

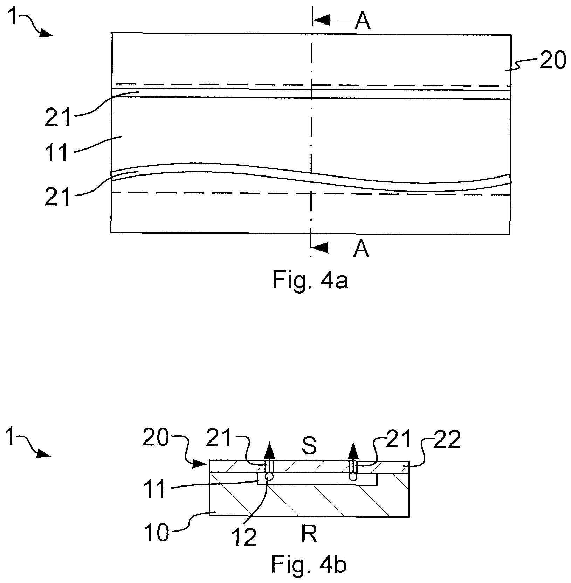

In den Figuren 4a und 4b ist eine weitere alternative Ausführungsvariante vorgesehen, bei welcher auf einem einzelnem Leuchtmittelträger 11 mehrere bzw. hier zwei Reihen von Leuchtmitteln 12 vorgesehen sind, wobei jeweils eine Reihe von Leuchtmitteln 12 einem durchleuchtbaren Abschnitt 21 der Dekorschicht 20 zugeordnet ist. Entsprechend ist der Leuchtmittelträger 11 bei der gezeigten Variante flächig ausgebildet und in das Trägerelement 10 eingebettet, wobei er alternativ auch vollflächig und das Trägerelement 10 vollständig bedeckend ausgebildet sein kann. Zwischen den Reihen von Leuchtmitteln 12 können auf dem Leuchtmittelträger 11 und mit ihm elektrisch verbunden auch elektrische Elemente, wie Widerstände, ICs oder Kondensatoren, zur Steuerung der Leuchtmittel 12 angeordnet sein. Diese können auch auf der zu dem Trägerelement 10 bzw. zu der Rückseite R weisenden Unterseite des Leuchtmittelträgers 11 angeordnet sein und sich in das Trägerelement 10 hinein erstrecken. Bei der Ausbildung des Trägerelements 10 kann dieses auch unmittelbar an den Leuchtmittelträger 10 mit den daran angeordneten elektrischen Komponenten in einem Spritzgussprozess angespritzt werden. Zur Kühlung der Komponenten können zudem auch Kühlstrukturen, wie beispielsweise Kühlrippen oder Kühlkanäle, in dem Trägerelement 10 vorgesehen sein.

Für alle Ausführungsformen gilt, dass die auf den Leuchtmittelträgern 11 vorgesehenen Leuchtmittel 12 vorzugsweise einzeln oder in Gruppen durch eine dafür ausgebildete, jedoch in den Figuren nicht dargestellte Steuerung ansteuerbar sind, wobei die Steuerung teilweise oder vollständig auf dem Leuchtmittelträger 11 bzw. integral mit diesem vorgesehen sein kann. Alternativ kann die Steuerung auch außerhalb des Zierteils 1 vorgesehen werden. Dadurch, dass die Leuchtmittel 11 durch die Steuerung einzeln oder in Gruppen ansteuerbar sind und die Leuchtmittel ausgebildet sind, verschiedene Farben und Licht in verschiedenen Leucht- bzw. Lichtintensitäten zu emittieren, können an der Sichtseite S des Zierteils 1 durch die durchleuchtbaren Abschnitte 21 der Dekorschicht 20 verschiedene zeitlich und in ihrer Intensität variable Leuchtmuster dargestellt werden.

## Patentansprüche

1. Beleuchtbares Zierteil (1) mit einer Sichtseite (S) und einer der Sichtseite (S) gegenüberliegenden Rückseite (R),
wobei das Zierteil (1) ein Trägerelement (10), zumindest einen Leuchtmittelträger (11) und eine Dekorschicht (20) aufweist, die an einer zu der Sichtseite (S) weisenden Fläche des Trägerelements (10) angeordnet und zumindest abschnittsweise durchleuchtbar ausgebildet ist, so dass die Dekorschicht (20) zumindest einen durchleuchtbaren Abschnitt (21) aufweist,
wobei der zumindest eine Leuchtmittelträger (11) in das Trägerelement (10) eingebettet und ausgebildet ist, Licht durch zumindest einen Teil der durchleuchtbaren Abschnitte (21) der Dekorschicht (20) zu der Sichtseite (S) des Zierteils zu emittieren,
wobei der Leuchtmittelträger (11) eine Vielzahl von Gruppen von Leuchtmitteln (12) umfasst, die jeweils ausgebildet sind, Licht zu erzeugen und zu emittieren und
wobei die Gruppen von Leuchtmitteln (12) unabhängig voneinander ansteuerbar sind, so dass zeit- und intensitätsvariable Lichtmuster erzeugbar sind,
wobei das Trägerelement (10) zumindest abschnittsweise transparent oder transluzent ausgebildet ist und der zumindest eine Leuchtmittelträger (11) den transparenten oder transluzenten Abschnitt (13) des Trägerelements (10) rahmenförmig umläuft, und
wobei der zumindest eine Leuchtmittelträger (11) ausgebildet ist, Licht in den transparenten oder transluzenten Abschnitt (13) des Trägerelements (10) und im Wesentlichen parallel zu einer durch die Dekorschicht (20) zu der Sichtseite (S) hin bestimmten Sichtfläche zu emittieren, so dass das von den Leuchtmitteln (12) erzeugte Licht seitlich in den transparenten oder transluzenten Abschnitt (13) eingekoppelt wird und der transparente oder transluzenten Abschnitt (13) flächig durchleuchtet wird,
wobei der zumindest eine Leuchtmittelträger (11) bandförmig als eine Leiterplatte ausgebildet ist, auf welcher elektrische Leitungen zur Stromversorgung und Steuerung der Leuchtmittel (12) aufgedruckt sind.

2. Zierteil nach Anspruch 1, wobei
die Dekorschicht (20) zumindest abschnittsweise perforiert ausgebildet ist und der zumindest eine durchleuchtbare Abschnitt (21) der Dekorschicht (20) durch die perforierten Abschnitte der Dekorschicht (20) gebildet wird, so dass die Dekorschicht (20) durch die perforierten Abschnitte hindurch durchleuchtbar ist.

3. Zierteil nach Anspruch 1 oder 2, wobei
die Dekorschicht (20) aus zumindest einem ersten intransparenten Abschnitt (22) und zumindest einem zweiten transparenten Abschnitt gebildet ist und der zumindest eine durchleuchtbare Abschnitt (21) der Dekorschicht (20) durch die transparenten Abschnitte gebildet wird, so dass die Dekorschicht (20) durch die transparenten Abschnitte hindurch durchleuchtbar ist.

4. Zierteil nach einem der vorhergehenden Ansprüche, wobei
an einer zu der Sichtseite (S) hin weisenden Fläche der Dekorschicht (20) eine die Dekorschicht (20) zu der Sichtseite (S) hin vollflächig bedeckende transparente Schutzschicht angeordnet oder ausgebildet ist.

5. Zierteil nach einem der vorhergehenden Ansprüche, wobei
zwischen dem Trägerelement (10) und der Dekorschicht (20) zumindest ein Diffusor angeordnet ist, der zur Lichtstreuung ausgebildet ist, wobei der Diffusor zumindest den durchleuchtbaren Abschnitt (21) der Dekorschicht (20) zu dem Trägerelement (10) hin abdeckt.

6. Zierteil nach einem der vorhergehenden Ansprüche, wobei
jede Gruppe von Leuchtmitteln (12) jeweils zumindest ein Leuchtmittel (12) umfasst und wobei das zumindest eine Leuchtmittel (12) jeweils ausgebildet ist, Licht in verschiedenen Farben zu erzeugen, so dass farbvariable Lichtmuster erzeugbar sind.

7. Zierteil nach einem der vorhergehenden Ansprüche, wobei
die Leuchtmittel (12) oder die Gruppen von Leuchtmitteln (12) auf dem Leuchtmittelträger (11) einreihig oder mehrreihig angeordnet sind.

8. Zierteil nach einem der vorhergehenden Ansprüche 1 bis 6, wobei
die Leuchtmittel (12) oder die Gruppen von Leuchtmitteln (12) auf dem Leuchtmittelträger (11) mehrreihig angeordnet sind,
zwischen den Reihen von Leuchtmitteln (12) oder den Reihen von Gruppen von Leuchtmitteln (12) ein Abstand vorgesehen ist, so dass jeweils eine Reihe einem durchleuchtbaren Abschnitt (21) der Dekorschicht (20) zugeordnet ist,

9. Zierteil nach einem der vorhergehenden Ansprüche 1 bis 6, wobei
die Leuchtmittel (12) oder die Gruppen von Leuchtmitteln (12) auf dem Leuchtmittelträger (11) mehrreihig angeordnet sind,
die Reihen von Leuchtmitteln (12) oder die Reihen von Gruppen von Leuchtmitteln (12) im Wesentlichen unmittelbar aneinander angrenzend angeordnet sind und die Leuchtmittel (12) oder die Gruppen von Leuchtmitteln (12) ein Raster aus Leuchtmitteln (12) bilden und das Raster einem durchleuchtbaren Abschnitt (21) der Dekorschicht (20) zugeordnet ist.

10. Zierteil nach einem der vorhergehenden Ansprüche, wobei
der zumindest eine Leuchtmittelträger (11) mit dem Trägerelement (10) stoffschlüssig verbunden ist.

## Claims

1. An illuminatable trim part (1) having a visible side (S) and a rear side (R) opposite the visible side (S),
wherein the trim part (1) has a carrier element (10), at least one lamp carrier (11), and a decorative layer (20) which is arranged on a surface of the carrier element (10) facing the visible side (S) and is designed such light can be shone through at least in some portions so that the decorative layer (20) has at least one portion (21) through which light can be shone,
wherein the at least one lamp carrier (11) is embedded in the carrier element (10) and is designed to emit light through at least part of the portions (21) of the decorative layer (20) through which light can be shone, towards the visible side (S) of the trim part,
wherein the lamp carrier (11) comprises a multiplicity of groups of lamps (12) each designed to generate and emit light, and
wherein the groups of lamps (12) are controllable independently of each other so that time- and intensity-variable light patterns can be generated,
wherein the carrier element (10) is designed to be transparent or translucent at least in some portions, and the at least one lamp carrier (11) surrounds the transparent or translucent portion (13) of the carrier element (10) in the form of a frame, and
wherein the at least one lamp carrier (11) is designed to emit light into the transparent or translucent portion (13) of the carrier element (10) and substantially parallel to a visible surface determined by the decorative layer (20) towards the visible side (S) so that the light generated by the lamps (12) is coupled laterally into the transparent or translucent portion (13) and light is shone through the surface of the transparent or translucent portion (13),
wherein the at least one lamp carrier (11) is designed in a strip-shaped manner as a printed circuit board on which electrical lines for supplying power to and controlling the lamps (12) are printed.

2. The trim part according to claim 1, wherein
the decorative layer (20) is formed perforated at least in some portions, and the at least one portion (21) of the decorative layer (20) through which light can be shone is formed by the perforated portions of the decorative layer (20) so that through the perforated portions, light can be shone through the decorative layer (20).

3. The trim part according to claim 1 or 2, wherein
the decorative layer (20) is formed of at least one first non-transparent portion (22) and at least one second transparent portion, and the at least one portion (21) of the decorative layer (20) through which light can be shone is formed by the transparent portions such that through the transparent portions, light can be shone through the decorative layer (20).

4. The trim part according to any one of the preceding claims, wherein
a transparent protective layer covering the entire surface of the decorative layer (20) towards the visible side (S) is arranged or formed on a surface of the decorative layer (20) facing towards the visible side (S).

5. The trim part according to any one of the preceding claims, wherein
at least one diffuser is arranged between the carrier element (10) and the decorative layer (20), which diffuser is designed to diffuse light, the diffuser covering at least the portion (21) of the decorative layer (20) through which light can be shone towards the carrier element (10).

6. The trim part according to any one of the preceding claims, wherein
each group of lamps (12) comprises in each case at least one lamp (12), and wherein the at least one lamp (12) is designed in each case to generate light in different colors, so that color-variable light patterns can be generated.

7. The trim part according to any one of the preceding claims, wherein
the lamps (12) or the groups of lamps (12) are arranged in a single row or in multiple rows on the lamp carrier (11).

8. The trim part according to any one of the preceding claims 1 to 6, wherein
the lamps (12) or the groups of lamps (12) are arranged in multiple rows on the lamp carrier (11),
a spacing is provided between the rows of lamps (12) or the rows of groups of lamps (12), so that in each case one row is assigned to a portion (21) of the decorative layer (20) through which light can be shone.

9. The trim part according to any one of the preceding claims 1 to 6, wherein
the lamps (12) or the groups of lamps (12) are arranged in multiple rows on the lamp carrier (11),
the rows of lamps (12) or the rows of groups of lamps (12) are arranged substantially directly adjacent to one another, and the lamps (12) or the groups of lamps (12) form a grid of lamps (12), and the grid is assigned to a portion (21) of the decorative layer (20) through which light can be shone.

10. The trim part according to any one of the preceding claims, wherein
the at least one lamp carrier (11 ) is firmly bonded to the carrier element (10).

## Revendications

1. Elément ornemental pouvant être éclairé (1), comprenant une face visible (S) et une face arrière (R) opposée à la face visible (S),
dans lequel l'élément ornemental (1) présente un élément de support (10), au moins un support de moyens d'éclairage (11) et une couche décorative (20) qui est agencée au niveau d'une surface de l'élément de support (10) orientée vers la face visible (S) et qui est réalisée de manière à pouvoir être éclairée par transparence au moins par endroits de sorte que la couche décorative (20) présente au moins une section pouvant être éclairée par transparence (21),
dans lequel ledit au moins un support de moyens d'éclairage (11) est incorporé dans l'élément de support (10) et est réalisé pour émettre de la lumière à travers au moins une partie de la section pouvant être éclairée par transparence (21) de la couche décorative (20) vers la face visible (S) de l'élément ornemental,
dans lequel le support de moyens d'éclairage (11) comprend une pluralité de groupes de moyens d'éclairage (12) qui sont respectivement réalisés pour générer et pour émettre de la lumière, et
dans lequel les groupes de moyens d'éclairage (12) peuvent être pilotés indépendamment les uns des autres de sorte que des motifs lumineux variables en temps et en intensité peuvent être générés,
dans lequel l'élément de support (10) est réalisé de manière transparente ou translucide au moins par endroits, et ledit au moins un support de moyens d'éclairage (11) contourne la section transparente ou translucide (13) de l'élément de support (10) en forme de cadre, et
dans lequel ledit au moins un support de moyens d'éclairage (11) est réalisé pour émettre de la lumière dans la section transparente ou translucide (13) de l'élément de support (10) et substantiellement en parallèle à une surface visible déterminée par la couche décorative (20) vers la face visible (S) de sorte que la lumière générée par les moyens d'éclairage (12) est injectée latéralement dans la section transparente ou translucide (13), et la section transparente ou translucide (13) est éclairée par transparence sur toute la surface,
dans lequel ledit au moins un support de moyens d'éclairage (11) est réalisé en forme de bande en tant que carte de circuits imprimés sur laquelle sont imprimés des lignes électriques pour l'alimentation électrique et la commande des moyens d'éclairage (12).

2. Elément ornemental selon la revendication 1, dans lequel la couche décorative (20) est réalisée de manière perforée au moins par endroits, et ladite au moins une section pouvant être éclairée par transparence (21) de la couche décorative (20) est formée par les sections perforées de la couche décorative (20) de sorte que la couche décorative (20) peut être éclairée par transparence à travers les sections perforées.

3. Elément ornemental selon la revendication 1 ou 2, dans lequel la couche décorative (20) est formée à partir d'au moins une première section non transparente (22) et d'au moins une deuxième section transparente, et ladite au moins une section pouvant être éclairée par transparence (21) de la couche décorative (20) est formée par les sections transparentes de sorte que la couche décorative (20) peut être éclairée par transparence à travers les sections transparentes.

4. Elément ornemental selon l'une quelconque des revendications précédentes, dans lequel une couche de protection transparente recouvrant sur toute la surface la couche décorative (20) vers la face visible (S) est agencée ou réalisée sur une surface de la couche décorative (20) tournée vers la face visible (S).

5. Elément ornemental selon l'une quelconque des revendications précédentes, dans lequel entre l'élément de support (10) et la couche décorative (20) est agencé au moins un diffuseur qui est réalisé pour diffuser la lumière, dans lequel le diffuseur couvre au moins la section pouvant être éclairée par transparence (21) de la couche décorative (20) vers l'élément de support (10).

6. Elément ornemental selon l'une quelconque des revendications précédentes, dans lequel chaque groupe de moyens d'éclairage (12) comprend respectivement au moins un moyen d'éclairage (12), et dans lequel ledit au moins un moyen d'éclairage (12) est respectivement réalisé pour générer de la lumière de différentes couleurs de sorte que des motifs lumineux de couleurs variables peuvent être générés.

7. Elément ornemental selon l'une quelconque des revendications précédentes, dans lequel les moyens d'éclairage (12) ou les groupes de moyens d'éclairage (12) sont agencés sur le support de moyens d'éclairage (11) sur une ou plusieurs rangées.

8. Elément ornemental selon l'une quelconque des revendications précédentes 1 à 6, dans lequel
les moyens d'éclairage (12) ou les groupes de moyens d'éclairage (12) sont agencés sur le support de moyens d'éclairage (11) sur plusieurs rangées,
entre les rangées de moyens d'éclairage (12) ou les rangées de groupes de moyens d'éclairage (12) une distance est prévue de sorte que respectivement une rangée est associée à une section pouvant être éclairée par transparence (21) de la couche décorative (20).

9. Elément ornemental selon l'une quelconque des revendications précédentes 1 à 6, dans lequel
les moyens d'éclairage (12) ou les groupes de moyens d'éclairage (12) sont agencés sur le support de moyens d'éclairage (11) sur plusieurs rangées,
les rangées de moyens d'éclairage (12) ou les rangées de groupes de moyens d'éclairage (12) sont agencées substantiellement de manière directement adjacente les unes aux autres, et les moyens d'éclairage (12) ou les groupes de moyens d'éclairage (12) forment un quadrillage de moyens d'éclairage (12), et le quadrillage est agencé dans une section pouvant être éclairée par transparence (21) de la couche décorative (20).

10. Elément ornemental selon l'une quelconque des revendications précédentes, dans lequel ledit au moins un support de moyens d'éclairage (11) est relié par liaison de matière à l'élément de support (10).
